# EUROPEAN PATENT SPECIFICATION

(11) **EP 4 622 753 B1**
(45) Date of publication and mention of the grant of the patent: **16.09.2026**
(21) Application number: 23895158.6
(22) Date of filing: 02.11.2023
(51) Int. Cl.: B21D 28/28, B21J 15/28, B21J 15/00, B21J 15/30, B21J 15/44

(54) **A PROFILE RIVETING LINE**
PROFILNIETLINIE
LIGNE DE RIVETAGE DE PROFILÉS

(30) Priority: 25.11.2022 TR 2022017909
(43) Date of publication of application: 01.10.2025
(73) Proprietor: MEKO METAL SANAYI VE TICARET ANONIM SIRKETI, Torbali, Izmir (TR)
(72) Inventor: KULAVUZ, Himmet Ufuk, 35860 Torbali/Izmir (TR); ATES, Refik Efekan, 35860 Torbali/Izmir (TR)
(74) Representative: Kaya, Erdem
(86) International application number: PCT/TR2023/051245
(87) International publication number: WO 2024/112294

(56) References cited:
- CN-A- 111 390 368
- CN-A- 112 157 176
- CN-A- 114 226 629
- CN-A- 114 226 629
- CN-U- 207 255 150
- CN-U- 207 358 057
- CN-U- 207 358 057
- CN-U- 207 709 705
- CN-U- 212 703 943
- CN-U- 215 279 734
- JP-A- 2014 514 165
- KR-A- 20150 069 794
- US-A1- 2008 098 786

## Description

### TECHNICAL FIELD

The invention relates to a profile riveting line, in particular for connecting U, C and G profiles to each other.

### PRIOR ART

Metal profiles can be used in various manufacturing areas. Various types of profiles made of galvanized sheet materials are used in the construction sector. Among the said profile types are U, C and G profiles. In various cases, there is a need for H-shaped profiles formed by connecting these types of profiles to each other base to base. The said joining process can be performed by welding. However, when the said welding method is used, the profile is deformed due to the temperature and the galvanized coating is damaged. Document CN 114 226 629 A shows a profile riveting line and forms the basis for the preamble of claim 1.

As a result, all the above-mentioned problems have made it necessary to realize a novelty in the relevant technical field.

### SUMMARY OF THE INVENTION

The present invention relates to a profile riveting line to eliminate the above-mentioned disadvantages and bring the new advantages to the relevant technical field.

The object of the invention is to provide a profile riveting line, in particular for connecting U, C and G profiles to each other without deformation due to heat.

In order to achieve all of the above-mentioned objects and those which will be apparent from the detailed description below, the present invention relates to a profile riveting line, in particular for riveting U, C and G profiles to each other with at least one riveting machine. Accordingly, a riveting unit on which the said riveting machine is positioned comprises at least one securing jaw for securing the profiles and at least one driving jaw, which can be displaced in the direction of extension of the profiles, for gripping the riveted profiles and displacing them for the next riveting step.

According to the invention, there is provided at least one centering element extending towards the profiles and at least partially inserted into the openings provided in the base parts of the profiles to ensure the position precision of the profiles to be connected to each other.

According to the invention, at least one abutment is provided on the riveting unit to ensure position precision of the profiles.

In a possible embodiment of the invention, a feeding unit is provided for feeding the profiles to the riveting unit.

In a possible embodiment of the invention, a carrier roller is provided on which the feeding unit is positioned on the profile.

In a possible embodiment of the invention, the carrier roller is formed such that it extends between the two side walls of the profile and rests on the base part.

In a possible embodiment of the invention, at least one lateral support roller is provided so that the other profile seated on the profile positioned on the carrier roller is supported on at least one side.

In a possible embodiment of the invention, there is provided at least one feeding roller positioned to at least partially rest against the profiles to enable the feeding unit to transfer the profiles to the riveting unit, and at least one feeding motor rotating the said feeding roller.

In a possible embodiment of the invention, at least one straightening unit is provided adjacent to the riveting unit.

In a possible embodiment of the invention, the straightening unit is provided with at least one side roller for resting externally against the lateral walls of the profiles.

In a possible embodiment of the invention, the straightening unit is provided with at least one inner bearing for resting internally against the lateral walls of the profiles.

In a possible embodiment of the invention, the straightening unit is provided with at least one upper plate and at least one lower plate on which the side rollers and the inner bearings are positioned.

In a possible embodiment of the invention, there is provided at least one vertical movement mechanism for vertical displacement of the upper plate and the lower plate.

In a possible embodiment of the invention, the vertical movement mechanism is provided with at least one ball screw and a drive arm for rotating the said ball screw.

In a possible embodiment of the invention, there is provided at least one packaging unit in which the profiles from the straightening unit are stacked.

### BRIEF DESCRIPTION OF THE FIGURES

Fig. 1 shows a representative isometric view of the profile riveting line according to the invention.

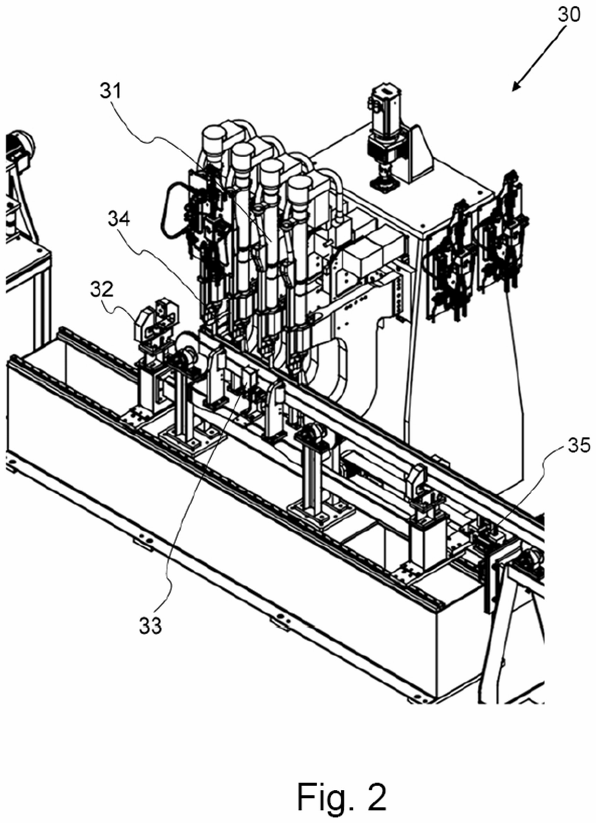

Fig. 2 shows a representative view of the riveting unit of the profile riveting line according to the invention.

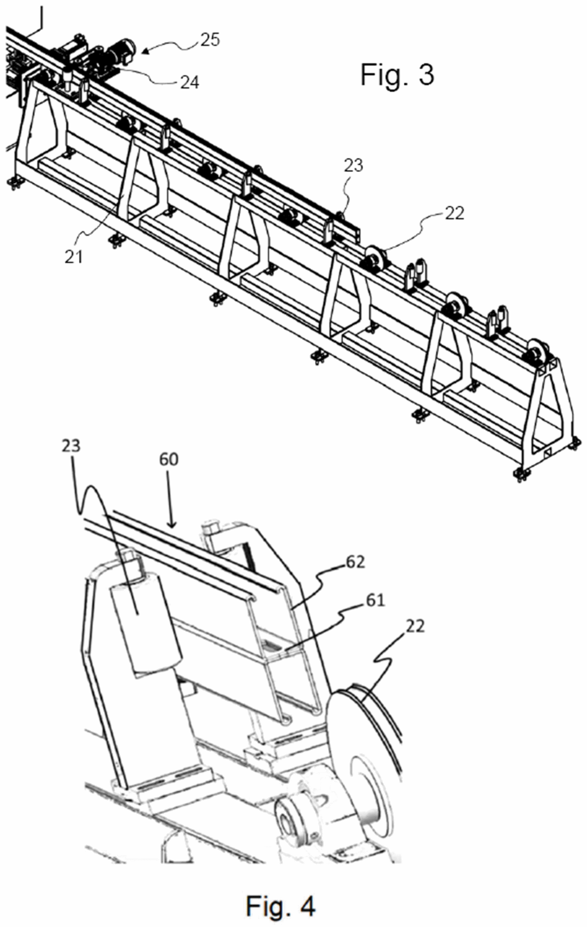

Fig. 3 shows a representative view of the feeding unit of the profile riveting line according to the invention.
Fig. 4 shows a representative detail view of the feeding unit of the profile riveting line according to the invention.

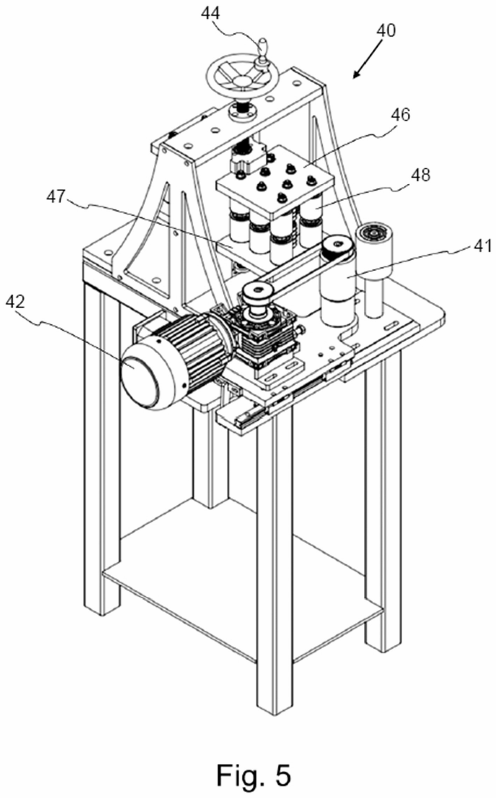

Fig. 5 shows a representative view of the straightening unit of the profile riveting line according to the invention.

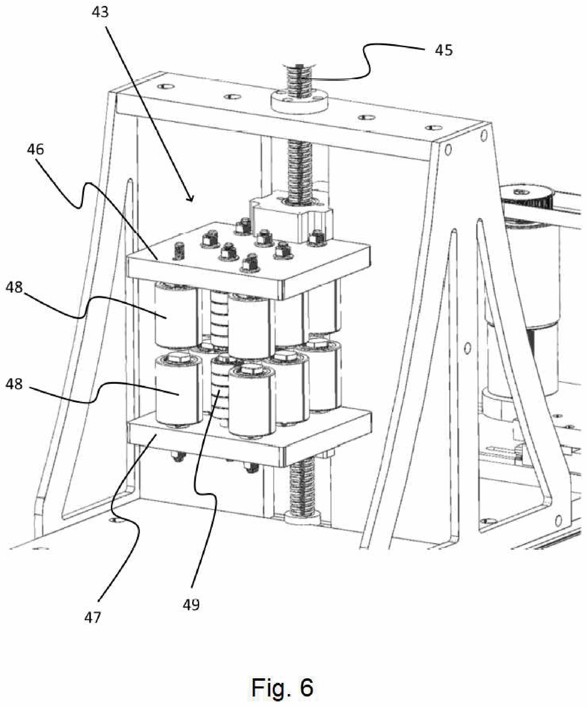

Fig. 6 shows a representative detail view of the straightening unit of the profile riveting line according to the invention.

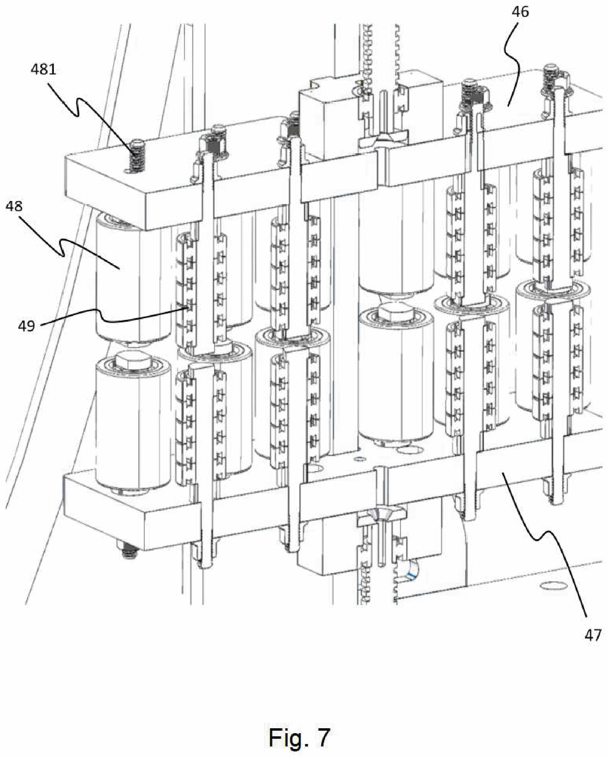

Fig. 7 shows a representative cross-sectional view of the straightening unit of the profile riveting line according to the invention.

### DETAILED DESCRIPTION OF THE INVENTION

In this detailed description, the profile riveting line (10) according to the invention is only described with the examples without any limiting effect for a better understanding of the subject.

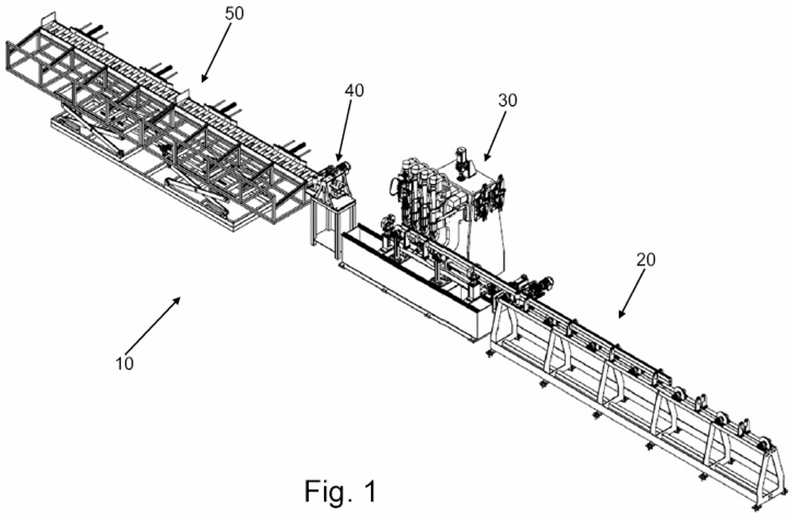

With reference to Fig. 1, the subject matter of the invention essentially has a feeding unit (20), a straightening unit (40) and a packaging unit (50) provided on the sides of a riveting unit (30).

The said feeding unit (20) has at least one carrier roller (22) provided on a body (21). The said carrier roller (22) is positioned vertically and free to rotate. A plurality of carrier rollers (22) are provided, lining up towards the riveting unit (30). The carrier roller (22) is provided with a width that allows it to enter the inside of the profile (60) to be riveted. Thus, when the profile (60) is positioned on the carrier roller (22), the carrier roller (22) extends towards the inside of the profile (60) and rests on the base part (61) from the inside. The second profile (60) to be riveted is placed on top so that its base part (61) is seated on the base part (61) of the first profile (60). At least one lateral support roller (23) is provided to ensure that the two profiles (60) are stable during this process. A plurality of the said lateral support rollers (23) are provided on the sides of the carrier rollers (22).

At least one feeding roller (24) is provided on the feeding unit (20). The said feeding roller (24) rests against the profiles (60) on at least one side and rotates under the drive of a feeding motor (25) to push the profiles (60) towards the riveting unit (30).

The riveting unit (30) has at least one riveting machine (31). The said riveting machine (31) is of the type described in the art as SPR (Self Pierce Riveting) riveting machine. At least one abutment (34) is provided on the riveting unit (30). The profiles (60) pushed by the feeding unit (20) rest against the abutment (34) to stop. A centering element (35) provided on the riveting unit (30) is configured to move vertically to approach the profiles (60). The centering element (35) is inserted into the openings provided in the base part (61) of the profile (60) to ensure full alignment of the openings in the base parts (61) of the profiles (60) to be riveted. At least one securing jaw (33) provided on the riveting unit (30) grips and secures the profiles (60). The secured profiles (60) are riveted by the riveting machine (31).

At least one driving jaw (32) is provided on the riveting unit (30). The said driving jaw (32) is configured to be displaced in the direction of extension of the profiles (60). Thus, after riveting, the profiles (60) are gripped by the driving jaws (32), released by the securing jaws (33) and transported by the displacement of the driving jaws (32) to the position where the next riveting will be performed. Then, they are gripped again by the securing jaw (33) and riveted again. This cycle can be repeated along the length of the profile (60).

A straightening unit (40) is provided adjacent to the riveting unit (30). The said straightening unit (40) straightens the deflections occurring in the profiles (60) during riveting and transfers the profile (60) to the packaging unit (50). To ensure this, at least one discharge roller (41) is provided on the straightening unit (40). The discharge roller (41) rests at least partially against the profile (60) from the side. The discharge roller (41) is rotated with a drive from a discharge motor (42) to move the profile (60) towards the packaging unit (50).

An upper plate (46) and a lower plate (47) are provided on the straightening unit (40). The said upper plate (46) and lower plate (47) are positioned essentially parallel to each other. At least one inner bearing (49) is provided on each of the upper plate (46) and the lower plate (47). The said inner bearings (49) are supported on the side of the upper plate (46) and lower plate (47) facing the profiles (60). In other words, the inner bearings (49) are positioned in the gaps in the center of the profiles (60) when the riveted profiles (60) arrive at the straightening unit (40). At least one side roller (48) is provided on the upper plate (46) and the lower plate (47). A plurality of said side rollers (48) are provided and run parallel to the side walls (62) of the profiles (60) from the upper plate (46) and the lower plate (47). A plurality of side rollers (48) are provided and lined up consecutively. In a possible embodiment of the invention, the side rollers (48) are supported on a shaft (481) eccentrically connected to the upper plate (46) and the lower plate (47). Thus, if necessary, the distance of the side rollers (48) to each other can be changed by rotating the shaft (481) slightly. This makes it possible to adjust the profiles (60) according to the amount of deflection that occurs.

There is provided a vertical movement mechanism (43) associated with the upper plate (46) and the lower plate (47). The said vertical movement mechanism (43) allows the upper plate (46) and the lower plate (47) to be displaced vertically and the position of the side rollers (48) and the inner bearing (49) to be changed according to the position and size of the profile (60). In a possible embodiment of the invention, the vertical movement mechanism (43) has at least one ball screw (45). The ball screw (45) is rotated by a drive arm (44) to displace the vertical movement mechanism (43).

As a result of all the above-mentioned embodiments of the profile riveting line (10) according to the invention, the two profiles (60) are joined together by riveting and made ready for use. Thermal deformation of the profile (60) is prevented by the riveted joining process. Therefore, the appearance of the profile (60) is not impaired and the coating thereon is protected without being damaged.

The scope of protection of the invention is set out in the appended claims and shall in no way be limited to what is described in this detailed description for illustrative purposes. Indeed, it is clear that a person skilled in the art can come up with similar embodiments in light of the foregoing description without departing from the scope of the appended claims

### REFERENCE NUMBERS GIVEN IN THE FIGURES

- 10: Profile riveting line
- 20: Feeding unit
21 Feeding unit body
22 Carrier roller
23 Lateral support roller
24 Feeding roller
25 Feeding motor
- 30: Riveting unit
31 Riveting machine
32 Driving jaw
33 Securing jaw
34 Abutment
35 Centering element
- 40: Straightening unit
41 Discharge roller
42 Discharge motor
43 Vertical movement mechanism
44 Drive arm
45 Ball screw
46 Upper plate
47 Lower plate
48 Side roller
481 Shaft
49 Inner bearing
- 50: Packaging unit
- 60: Profile
61 Base part
62 Side wall

## Claims

1. A profile riveting line (10), in particular for riveting U, C and G profiles (60) to each other with at least one riveting machine (31), wherein a riveting unit (30) on which the said riveting machine (31) is positioned comprises at least one driving jaw (32), which is configured to be displaced in the direction of extension of the profiles (60), for gripping the riveted profiles (60) and displacing them for a subsequent riveting operation,and **characterized in that** the riveting unit (30) further comprises at least one abutment (34) configured such that, in use, the profiles (60) fed to the riveting unit (30) rest against the abutment (34) to stop, and at least one centering element (35) provided on the riveting unit (30) and configured to move vertically towards the profiles (60) and to be at least partially inserted into the openings provided in the base parts (61) of the profiles (60) to ensure full alignment of the openings in the base parts (61) of the profiles (60), two profiles (60) arranged base part (61) to base part (61), and at least one securing jaw (33) configured to grip and secure the aligned profiles (60) during riveting by the riveting machine (31), and wherein the driving jaw (32) is configured to grip the riveted profiles (60), after release by the securing jaw (33), and to transport the riveted profiles (60) to a position where a subsequent riveting operation is to be performed, the securing jaw (33) being configured to grip the profiles (60) again at said position for a subsequent riveting operation.

2. A profile riveting line (10) according to claim 1, **characterized in that** it comprises a feeding unit (20) for feeding the profiles (60) to the riveting unit (30).

3. A profile riveting line (10) according to claim 2, **characterized in that** it comprises a carrier roller (22) on which, in use, one of the profiles (60) is positioned.

4. A profile riveting line (10) according to claim 3, **characterized in that** the carrier roller (22) is formed such that, in use, it extends between the two side walls (62) of the profile (60) and rests on the base part (61).

5. A profile riveting line (10) according to claim 2, **characterized in that** it comprises at least one lateral support roller (23) arranged such that, in use, the other profile (60) seated on the profile (60) positioned on the carrier roller (22) is supported on at least one side.

6. A profile riveting line (10) according to claim 2, **characterized in that** it comprises at least one feeding roller (24) configured to at least partially rest against the profiles (60) to transfer, in use, the profiles (60) to the riveting unit (30), and at least one feeding motor (25) configured to rotate the feeding roller (24).

7. A profile riveting line (10) according to claim 1, **characterized in that** it comprises at least one straightening unit (40) provided adjacent to the riveting unit (30).

8. A profile riveting line (10) according to claim 7, **characterized in that** the straightening unit (40) comprises at least one side roller (48) for resting externally against the lateral walls (62) of the profiles (60).

9. A profile riveting line (10) according to claim 7, **characterized in that** the straightening unit (40) comprises at least one inner bearing (49) for resting internally against the lateral walls (62) of the profiles (60).

10. A profile riveting line (10) according to claim 8 and 9, **characterized in that** the straightening unit (40) comprises at least one upper plate (46) and at least one lower plate (47) on which the side rollers (48) and the inner bearings (49) are positioned.

11. A profile riveting line (10) according to claim 10, **characterized in that** it comprises at least one vertical movement mechanism (43) for vertical displacement of the upper plate (46) and the lower plate (47).

12. A profile riveting line (10) according to claim 11, **characterized in that** the vertical movement mechanism (43) comprises at least one ball screw (45) and a drive arm (44) for rotating the said ball screw (45).

13. A profile riveting line (10) according to claim 7, **characterized in that** the straightening unit (40) comprises at least one discharge roller (41) configured to rest at least partially against the profiles (60) from a side, and at least one discharge motor (42) configured to rotate the discharge roller (41) to move the profiles (60) towards a packaging unit (50).

## Patentansprüche

1. Profil-Nietlinie (10), insbesondere zum Vernieten von U-, C- und G-Profilen (60) miteinander mit mindestens einer Nietmaschine (31), wobei eine Nieteinheit (30), auf der die genannte Nietmaschine (31) angeordnet ist, mindestens eine Antriebsbacke (32) umfasst, die dazu ausgebildet ist, in Erstreckungsrichtung der Profile (60) verfahren zu werden, um die vernieteten Profile (60) zu greifen und sie für einen nachfolgenden Nietvorgang zu verlagern, **dadurch gekennzeichnet, dass** die Nieteinheit (30) ferner mindestens einen Anschlag (34) umfasst, der derart ausgebildet ist, dass sich die der Nieteinheit (30) zugeführten Profile (60) im Gebrauch zum Anhalten an den Anschlag (34) anlegen, sowie mindestens ein an der Nieteinheit (30) vorgesehenes Zentrierelement (35), das dazu ausgebildet ist, sich vertikal auf die Profile (60) zuzubewegen und zumindest teilweise in die in den Basisteilen (61) der Profile (60) vorgesehenen Öffnungen eingeführt zu werden, um die vollständige Ausrichtung der Öffnungen in den Basisteilen (61) der Profile (60), von zwei Profilen (60), die Basisteil (61) an Basisteil (61) angeordnet sind, sicherzustellen, sowie mindestens eine Sicherungsbacke (33), die dazu ausgebildet ist, die ausgerichteten Profile (60) während des Nietens durch die Nietmaschine (31) zu greifen und zu sichern, und wobei die Antriebsbacke (32) dazu ausgebildet ist, die vernieteten Profile (60) nach dem Freigeben durch die Sicherungsbacke (33) zu greifen und die vernieteten Profile (60) zu einer Position zu transportieren, an der ein nachfolgender Nietvorgang durchgeführt werden soll, wobei die Sicherungsbacke (33) dazu ausgebildet ist, die Profile (60) an der genannten Position für einen nachfolgenden Nietvorgang erneut zu greifen.

2. Profil-Nietlinie (10) nach Anspruch 1, **dadurch gekennzeichnet, dass** sie eine Zuführeinheit (20) zum Zuführen der Profile (60) zu der Nieteinheit (30) umfasst.

3. Profil-Nietlinie (10) nach Anspruch 2, **dadurch gekennzeichnet, dass** sie eine Tragrolle (22) umfasst, auf der im Gebrauch eines der Profile (60) angeordnet ist.

4. Profil-Nietlinie (10) nach Anspruch 3, **dadurch gekennzeichnet, dass** die Tragrolle (22) derart ausgebildet ist, dass sie sich im Gebrauch zwischen den beiden Seitenwänden (62) des Profils (60) erstreckt und auf dem Basisteil (61) aufliegt.

5. Profil-Nietlinie (10) nach Anspruch 2, **dadurch gekennzeichnet, dass** sie mindestens eine seitliche Stützrolle (23) umfasst, die derart angeordnet ist, dass im Gebrauch das andere Profil (60), das auf dem auf der Tragrolle (22) angeordneten Profil (60) aufsitzt, mindestens auf einer Seite abgestützt wird.

6. Profil-Nietlinie (10) nach Anspruch 2, **dadurch gekennzeichnet, dass** sie mindestens eine Zuführrolle (24) umfasst, die dazu ausgebildet ist, zumindest teilweise an den Profilen (60) anzuliegen, um die Profile (60) im Gebrauch zu der Nieteinheit (30) zu fördern, sowie mindestens einen Zuführmotor (25), der dazu ausgebildet ist, die Zuführrolle (24) zu drehen.

7. Profil-Nietlinie (10) nach Anspruch 1, **dadurch gekennzeichnet, dass** sie mindestens eine Richteinheit (40) umfasst, die benachbart zu der Nieteinheit (30) vorgesehen ist.

8. Profil-Nietlinie (10) nach Anspruch 7, **dadurch gekennzeichnet, dass** die Richteinheit (40) mindestens eine Seitenrolle (48) umfasst, die dazu ausgebildet ist, außen an den Seitenwänden (62) der Profile (60) anzuliegen.

9. Profil-Nietlinie (10) nach Anspruch 7, **dadurch gekennzeichnet, dass** die Richteinheit (40) mindestens ein Innenlager (49) umfasst, das dazu ausgebildet ist, innen an den Seitenwänden (62) der Profile (60) anzuliegen.

10. Profil-Nietlinie (10) nach Anspruch 8 und 9, **dadurch gekennzeichnet, dass** die Richteinheit (40) mindestens eine obere Platte (46) und mindestens eine untere Platte (47) umfasst, auf denen die Seitenrollen (48) und die Innenlager (49) angeordnet sind.

11. Profil-Nietlinie (10) nach Anspruch 10, **dadurch gekennzeichnet, dass** sie mindestens einen Vertikalbewegungsmechanismus (43) zur vertikalen Verlagerung der oberen Platte (46) und der unteren Platte (47) umfasst.

12. Profil-Nietlinie (10) nach Anspruch 11, **dadurch gekennzeichnet, dass** der Vertikalbewegungsmechanismus (43) mindestens eine Kugelgewindespindel (45) und einen Antriebsarm (44) zum Drehen der genannten Kugelgewindespindel (45) umfasst.

13. Profil-Nietlinie (10) nach Anspruch 7, **dadurch gekennzeichnet, dass** die Richteinheit (40) mindestens eine Austragsrolle (41) umfasst, die dazu ausgebildet ist, zumindest teilweise seitlich an den Profilen (60) anzuliegen, sowie mindestens einen Austragsmotor (42), der dazu ausgebildet ist, die Austragsrolle (41) zu drehen, um die Profile (60) zu einer Verpackungseinheit (50) zu bewegen.

## Revendications

1. Une ligne de rivetage de profilés (10), en particulier pour riveter des profilés en U, C et G (60) les uns aux autres avec au moins une machine à riveter (31), dans laquelle une unité de rivetage (30) sur laquelle ladite machine à riveter (31) est positionnée comprend au moins une mâchoire d'entraînement (32), qui est configurée pour être déplacée dans la direction d'extension des profilés (60), pour saisir les profilés rivetés (60) et les déplacer pour une opération de rivetage ultérieure, et **caractérisée en ce que** l'unité de rivetage (30) comprend en outre au moins une butée (34) configurée de telle sorte que, lors de l'utilisation, les profilés (60) alimentés à l'unité de rivetage (30) reposent contre la butée (34) pour s'arrêter, et au moins un élément de centrage (35) prévu sur l'unité de rivetage (30) et configuré pour se déplacer verticalement vers les profilés (60) et pour être au moins partiellement inséré dans les ouvertures prévues dans les parties de base (61) des profilés (60) afin d'assurer un alignement complet des ouvertures dans les parties de base (61) des profilés (60), les deux profilés (60) étant disposés partie de base (61) à partie de base (61), et au moins une mâchoire de fixation (33) configurée pour saisir et fixer les profilés alignés (60) pendant le rivetage par la machine à riveter (31), et dans laquelle la mâchoire d'entraînement (32) est configurée pour saisir les profilés rivetés (60), après libération par la mâchoire de fixation (33), et pour transporter les profilés rivetés (60) vers une position où une opération de rivetage ultérieure doit être effectuée, la mâchoire de fixation (33) étant configurée pour saisir à nouveau les profilés (60) à ladite position pour une opération de rivetage ultérieure.

2. Ligne de rivetage de profilés (10) selon la revendication 1, **caractérisée en ce qu'**elle comprend une unité d'alimentation (20) pour alimenter les profilés (60) vers l'unité de rivetage (30).

3. Ligne de rivetage de profilés (10) selon la revendication 2, **caractérisée en ce qu'**elle comprend un rouleau porteur (22) sur lequel, lors de l'utilisation, l'un des profilés (60) est positionné.

4. Ligne de rivetage de profilés (10) selon la revendication 3, **caractérisée en ce que** le rouleau porteur (22) est formé de telle sorte que, lors de l'utilisation, il s'étend entre les deux parois latérales (62) du profilé (60) et repose sur la partie de base (61).

5. Ligne de rivetage de profilés (10) selon la revendication 2, **caractérisée en ce qu'**elle comprend au moins un rouleau de support latéral (23) disposé de telle sorte que, lors de l'utilisation, l'autre profilé (60) posé sur le profilé (60) positionné sur le rouleau porteur (22) est supporté sur au moins un côté.

6. Ligne de rivetage de profilés (10) selon la revendication 2, **caractérisée en ce qu'**elle comprend au moins un rouleau d'alimentation (24) configuré pour reposer au moins partiellement contre les profilés (60) pour transférer, lors de l'utilisation, les profilés (60) vers l'unité de rivetage (30), et au moins un moteur d'alimentation (25) configuré pour faire tourner le rouleau d'alimentation (24).

7. Ligne de rivetage de profilés (10) selon la revendication 1, **caractérisée en ce qu'**elle comprend au moins une unité de redressage (40) prévue adjacente à l'unité de rivetage (30).

8. Ligne de rivetage de profilés (10) selon la revendication 7, **caractérisée en ce que** l'unité de redressage (40) comprend au moins un rouleau latéral (48) pour reposer extérieurement contre les parois latérales (62) des profilés (60).

9. Ligne de rivetage de profilés (10) selon la revendication 7, **caractérisée en ce que** l'unité de redressage (40) comprend au moins un palier intérieur (49) pour reposer intérieurement contre les parois latérales (62) des profilés (60).

10. Ligne de rivetage de profilés (10) selon la revendication 8 et 9, **caractérisée en ce que** l'unité de redressage (40) comprend au moins une plaque supérieure (46) et au moins une plaque inférieure (47) sur lesquelles les rouleaux latéraux (48) et les paliers intérieurs (49) sont positionnés.

11. Ligne de rivetage de profilés (10) selon la revendication 10, **caractérisée en ce qu'**elle comprend au moins un mécanisme de déplacement vertical (43) pour le déplacement vertical de la plaque supérieure (46) et de la plaque inférieure (47).

12. Ligne de rivetage de profilés (10) selon la revendication 11, **caractérisée en ce que** le mécanisme de déplacement vertical (43) comprend au moins une vis à billes (45) et un bras d'entraînement (44) pour faire tourner ladite vis à billes (45).

13. Ligne de rivetage de profilés (10) selon la revendication 7, **caractérisée en ce que** l'unité de redressage (40) comprend au moins un rouleau d'évacuation (41) configuré pour reposer au moins partiellement contre les profilés (60) depuis un côté, et au moins un moteur d'évacuation (42) configuré pour faire tourner le rouleau d'évacuation (41) pour déplacer les profilés (60) vers une unité d'emballage (50).
